# EUROPEAN PATENT APPLICATION

(11) **EP 4 358 328 A1**
(43) Date of publication of application: **24.04.2024**
(21) Application number: 22201984.6
(22) Date of filing: 17.10.2022
(51) Int. Cl.: H02G 3/06, H01R 9/05, H02G 15/013, H02G 15/04

(54) **CLAMPING DEVICE FOR CABLE CONNECTOR ASSEMBLY**

(71) Applicant: CMP Products Limited, Newcastle upon Tyne NE6 1BS (GB)
(72) Inventor: The designation of the inventor has not yet been filed
(74) Representative: Murgitroyd & Company

(57) **Abstract**

A clamping device for clamping an armour layer (10) of a cable (4) in a cable gland is disclosed. An insert (16) comprises an aperture (20) for receiving an inner part of the cable (4) and clamping portions (22) define respective first clamping surfaces (24) and second clamping surfaces (26). A clamping ring (18) co-operates with the insert (16) to clamp the armour layer (10) between the insert (16) and the clamping ring (18), and has recesses (52, 54). The clamping portions (22) are displaceable towards the cable (4) extending through the aperture (20) as a result of clamping of the armour layer (10) between the insert (16) and the clamping ring (18) such that the armour layer (10) is clamped between the first clamping surfaces (24) and the clamping ring (18) and/or between the second clamping surfaces (26) and a recess (52, 54) receiving part of the second clamping surfaces (26).

## Description

The present disclosure relates to a clamping device for a cable connector assembly for clamping an armour layer of a cable, and relates particularly, but not exclusively, to a clamping device for clamping single wire armour or basket weave braid or screen of a cable within a cable gland.

Cable glands provide a mechanical connection between a cable and an installation, such as a junction box. The connection may have to satisfy one or more physical requirements, such as the ability to resist pulling forces experienced by the cable, to prevent the ingress of water from the surrounding environment, or the force of an explosion.

A cable may include an integrated layer of armour for providing mechanical strength to the cable and for preventing damage to the inner layers and wires of the cable. The armour layer may for example be single wire armour, metallic tape, braid or screen. The armour, tape, braid or screen may also be present within the cable for electrical or electromagnetic (EMC) purposes.

Armour layers are typically metallic and it is therefore often necessary for electrical safety to provide a secure connection between the armour layer and earth when the cable is installed in the cable gland. Therefore, in addition to providing a secure mechanical connection between the installation and the cable, the cable gland must maintain a reliable electrical connection between the armour layer of the cable and earth. This is usually achieved by means of a clamping device arranged in the cable gland housing. The clamping device has an inner part known as a cone and an outer part known as a clamping ring, and the cable armour layer is clamped between the cone and the clamping ring and held in the clamping position by the cable gland housing.

Different armour types have different physical characteristics. For example, single wire armour comprises wires which are thick and stiff, while braid comprises a large number of finer wires. In order to provide a sufficiently secure mechanical and electrical connection, the clamping device of the cable gland must be chosen so that it closely matches the physical dimensions of the armour layer of the cable being clamped.

Clamping devices for cable glands are known in which a pair of cones of different sizes is provided, wherein the cone of one size is used for braid, and the cone of the other size is used for single wire armour. Alternatively, a double sided, 'reversible' or 'universal' cone can be provided, wherein one end of the cone is suitably sized for braid and the other end of the cone is suitably sized for single wire armour, and the double cone is reversibly arranged in a cable gland, the orientation of the double cone is chosen by the installer depending on the type of armour to be clamped. However, because two cones are usually provided when a cable gland assembly is supplied, there is a possibility of choosing the inappropriately sized cone for a particular cable armour type, which means that when installed, the mechanical or electrical connection has an increased risk of failure.

Clamping devices are also known in which a tapering gap is formed between the cone and the clamping ring. The cable armour layer is held in a clamped condition in the tapering gap, but the position of the cone and clamping ring relative to each other varies, depending on whether braid or single wire armour is being clamped and the thickness of the armour layer. This in turn means that the position of the two mutually engaging cable gland housing parts also varies with the type and thickness of cable armour being clamped, as a result of which it is difficult to determine whether a reliable clamping connection has been made.

A further clamping device for an armour layer of a cable for use in a cable gland is disclosed in WO 2021/148254. This clamping device works well when clamping single wire armour, although difficulties in maintaining a solid retention of the clamping ring, when the body of the cable gland is removed for inspection can be experienced when clamping braid, which is generally thinner than single wire armour.

Preferred embodiments of the present disclosure seek to overcome one or more of the above disadvantages.

According to a first aspect of the present disclosure, there is provided an insert as defined in claim 1.

By providing at least one clamping portion comprising a respective outwardly extending portion adapted to cause part of the armour layer to be deformed such that said part of the armour layer is clamped between the outwardly extending portion and a recess in the clamping member and/or adapted to be deformed as a result of clamping of part of said armour layer between the clamping portion and the clamping member, this provides the advantage of increasing the axial force required to pull the armour layer out of the clamping device when the armour layer is insufficiently thick to be securely clamped between the insert and the clamping member. In addition, the arrangement in which part of the armour layer is clamped between the outwardly extending portion and a recess in the clamping member provides the advantage that less reliance is necessary on the closeness of the mechanical fit between the clamping portion, the armour layer and the clamping member, and prevents inadvertent removal of the clamping member when the body of the cable gland is removed for inspection purposes.

At least part of at least one said clamping portion may be displaceable towards the inner part of the cable extending through said aperture as a result of clamping of the armour layer between the insert and the clamping member.

At least one said outwardly extending portion may be formed at an end portion of the corresponding said clamping portion.

This provides the advantage of enabling easier manufacture of the clamping portion by, for example, bending the end portion of the clamping portion away from an axis of the cable connector.

At least part of at least one said clamping portion may be displaceable towards the inner part of the cable extending through the aperture by means of deformation of said part of the clamping portion.

This provides the advantage of reducing the complexity of the insert and reducing its manufacturing cost.

At least part of at least one said clamping portion may be defined by a respective inwardly displaceable portion.

The insert may comprise a plurality of said inwardly displaceable portions separated by slots.

This provides the advantage of enabling the mechanical characteristics of the clamping portion to be matched to the intended use of the device, and enables a wider variety of materials to be used for a clamping portion.

The slots may terminate at a location spaced from an axial end of the insert.

This provides the advantage of enabling the insert to be more easily manufactured, while increasing the mechanical strength of the insert.

The insert may comprise an insert body and a clamping part mounted to the insert body, wherein the clamping part defines at least one said clamping portion and an end portion of the insert body is deformed radially outwards to prevent removal of the clamping part from the insert body.

According to another aspect of the present disclosure, there is provided a method as defined in claim 9.

According to a further aspect of the present disclosure, there is provided a clamping device as defined in claim 10.

The clamping member may have an annular body adapted to surround the insert.

The clamping member may be adapted to stretch when an armour layer of the cable is clamped between the insert and the clamping member.

This provides the advantage of enabling a wide range of armour layer thicknesses to be clamped effectively.

A plurality of said recesses may be arranged at substantially equal respective axial distances from each axial end of the clamping member.

This provides the advantage of making it more difficult to assemble the clamping apparatus incorrectly, thereby improving reliability of the apparatus.

The insert and the clamping member may be adapted to abut each other in an axial direction of the cable when said armour layer is clamped between the insert and the clamping member when the insert and the clamping member are in a predetermined position relative to each other.

This provides the advantage of enabling the length of the clamping apparatus, in an axial direction of the cable, to be constant for a range of cable armour thicknesses, thereby enabling reliable connection of a cable connector to the cable armour easier to determine.

According to a further aspect of the present disclosure, there is provided a cable connector as defined in claim 12.

The first and second housing parts may be co-operatively threaded such that engagement of the first housing part by the second housing part causes one housing part to abut the insert and the other housing part to abut the clamping member to move the clamping member to surround the insert and to thereby clamp the armour layer between the clamping member and at least one said clamping portion of the insert.

A position of the first housing part relative to the second housing part may be defined by abutment with said insert and said clamping member in an axial direction of the cable when said armour layer is clamped between the insert and the clamping member when the insert and clamping member are in a predetermined position relative to each other.

The position of the first housing part relative to the second housing part may be defined by abutment of the first housing part with one of said insert and said clamping member, and abutment of the second housing part with the other of said insert and said clamping member.

The cable connector may be a cable gland.

A preferred embodiment of the disclosure will now be described, by way of example only and not in any limitative sense, with reference to the accompanying drawings in which:-
Figure 1A is a perspective view of an insert of a clamping device of an embodiment, before deformation of an end portion of an insert body thereof;
Figure 1B is a perspective view of the insert of Figure 1A, after deformation of the end portion of the insert body;
Figure 1C is a cross sectional view of the insert of Figure 1A;
Figure ID is a cross sectional view of the insert of Figure 1B;
Figure 2 is a cross sectional view of a cable gland incorporating the clamping device with a braid armour layer of a cable located therein, prior to clamping;
Figure 3 is an enlarged view of part of Figure 2;
Figure 4 is a view corresponding to Figure 2 with the armour layer clamped between the insert and the clamping member;
Figure 5 is an enlarged view of part of Figure 4;
Figure 6 is a cross sectional view of a cable gland incorporating the clamping device with a wire armour layer of a cable located therein, prior to clamping;
Figure 7 is an enlarged view of part of Figure 6;
Figure 8 is a view corresponding to Figure 6 with the armour layer clamped between the insert and the clamping member; and
Figure 9 is an enlarged view of part of Figure 8.

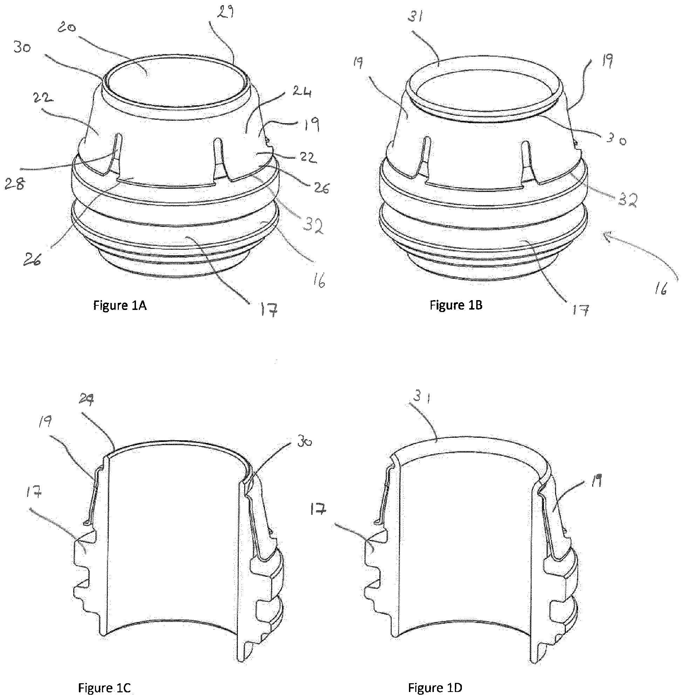

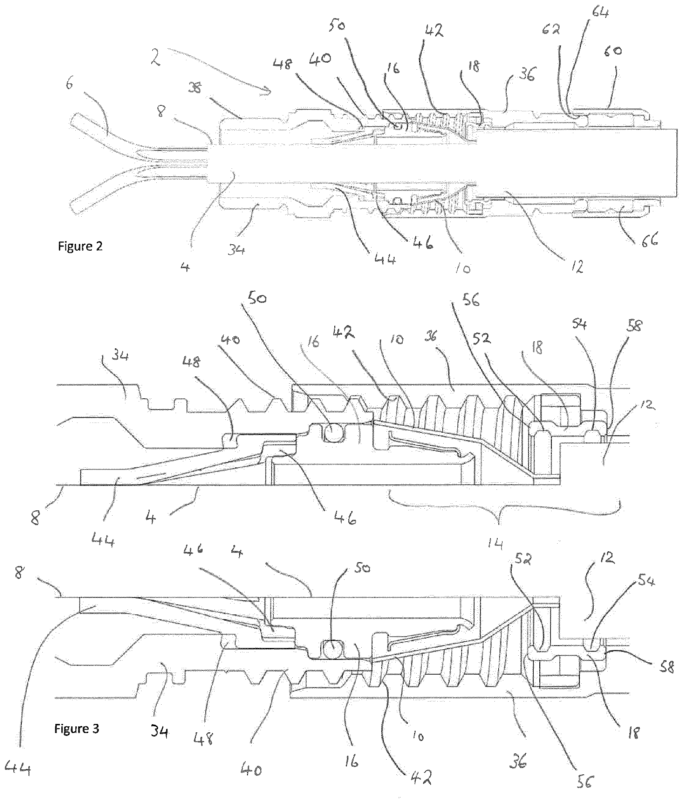

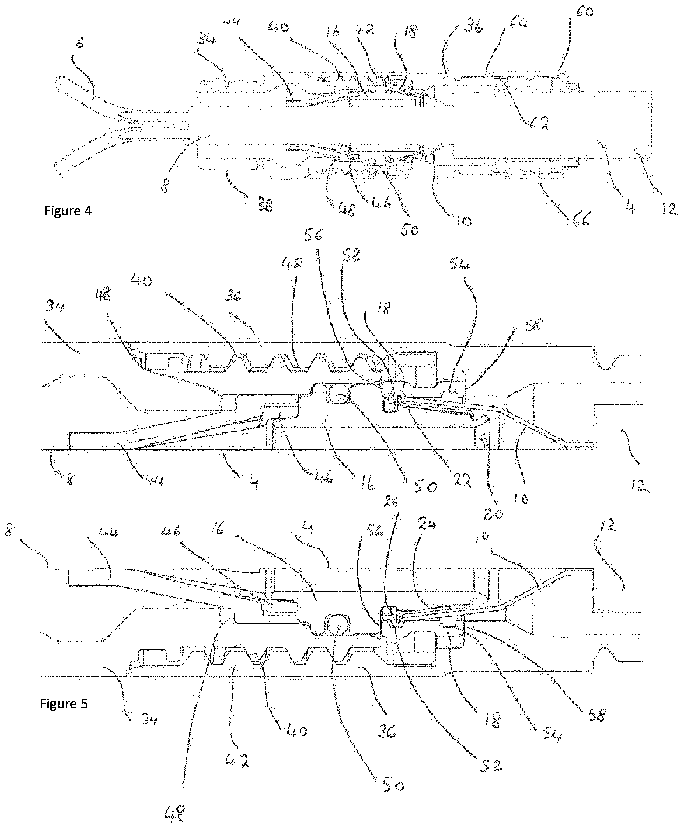

Referring to the Figures, Figures 1 to 5 show a cable connector in the form of a cable gland 2 for connecting a cable 4 to an enclosure (not shown). The cable 4 includes inner conductors 6, an inner sheath 8, an armour layer 10 of metallic braid, and an outer sheath 12. The cable gland 2 includes a clamping device 14 for clamping the armour layer 10 of the cable 4 to prevent removal of the cable 4 from the cable gland 2. The clamping device 14 includes an insert in the form of a compensating cone assembly 16, and a clamping member in the form of a clamping ring 18 adapted to be arranged radially outwardly of the compensating cone assembly 16 in order to clamp the armour layer 10 of the cable 4 between the compensating cone assembly 16 and clamping ring 18.

As shown in greater detail in Figures 1A to ID, the compensating cone assembly 16 has an aperture 20 therethrough for receiving an inner part of the cable 4 comprising the inner conductors 6 and the inner sheath 8, and is formed from an insert body 17 and a clamping part 19 mounted to the insert body 17, wherein the clamping part 19 defines a series of circumferentially arranged clamping portions 22, wherein each clamping portion 22 defines a first clamping surface 24 and an outwardly extending portion in the form of radially outwardly flared ends 26 of the clamping portions 22. The clamping portions 22 are separated by slots 28 extending from a position spaced from a first end 30 of the clamping part 19 to a second end 32 of the clamping part 19. The clamping portions 22 can be resiliently displaced radially inwardly, in a manner described in greater detail below.

In order to form the compensating cone assembly 16, the clamping part 19 is placed over the insert body 17 as shown in Figures 1A and 1C, and a rigid tool (not shown) is then pushed into the end of the insert body 17 to deform an edge 29 of the insert body 17 radially outwards to form a flared edge 31, as shown in Figures 1B and ID. The flared edge 31 then prevents the clamping part 19 from being removed from the insert body 17.

The cable gland 2 has a first housing part in the form of an entry item 34 and a second housing part 36. The entry item 34 has a first threaded portion 38 on its outer surface for engagement with a threaded portion on an aperture of an enclosure (not shown) to which the cable gland 2 is to be mounted or on a nut (not shown) for securing the cable gland 2 to the enclosure. The entry item also has a second threaded portion 40 on its outer surface for engaging a threaded portion 42 on an inner surface of the second housing part 36 to enable the second housing part 36 to be mounted to the entry item 34.

A frusto-conical flexible seal 44 for sealingly engaging the outer surface of the inner sheath 8 of the cable 4 is supported by a seal support 46 and engages an annular recess 48 in an inner surface of the entry item 34. The seal support 46 is held in position in the annular recess 48 by the compensating cone assembly 16, which is in turn removably held in position in the entry item 34 by means of an annular resilient clip or O-ring 50.

The clamping ring 18 includes recesses in the form of annular grooves 52, 54 located equidistantly from axial ends 56, 58 of the clamping ring 18 so that the clamping ring 18 can be arranged in the cable gland 2 in both orientations. The cable gland 2 includes a third housing part 60 having a threaded portion 62 on its inner surface which engages a threaded portion 64 on an outer surface of the second housing part 36 to enable the third housing part 60 to be mounted to the second housing part 36. Mounting of the third housing part 60 to the second housing part 36 axially compresses a seal 66 which causes the seal 66 to expand radially inwardly to sealingly engage an outer surface of the outer sheath 12 of the cable 4.

The operation of the cable gland 2 shown in Figures 1 to 5 will now be described.

In order to secure the cable gland 2 to the cable 4, the second 36 and third 60 housing parts, the clamping ring 18 and the seal 66 are loosely mounted to the outer sheath 12 of the cable 4, and the braid armour layer 10 of the cable 4 is splayed radially outwardly. The inner part of the cable including the inner conductors 6 and the inner sheath 8 is inserted into the entry item 34 through the aperture in the compensating cone assembly 16 and through the flexible seal 44 and seal support 46 so that the armour layer 10 of the cable 4 lies over the first clamping surfaces 24 and radially outwardly flared ends 26 of the clamping portions 22 of the compensating cone assembly 16.

The second housing part 36 is then tightened onto the entry item 34, as a result of which the clamping ring 18 is brought into axial abutment with the compensating cone assembly 16 and second housing part 36. This causes the outwardly flared ends 26 of the clamping portions 22 of the compensating cone assembly 16 to deform the braid armour layer 10 to urge the braid armour layer 10 into the groove 52 of the clamping ring 18, thereby firmly clamping the armour layer 10 in position between the clamping portions 22 of the compensating cone assembly 16 and the clamping ring 18. At the same time, the outwardly flared end portions 26 of the compensating cone assembly 16 are received in one of the grooves of the clamping ring, which forces the braid armour layer into the inner groove to anchor the armour layer in position. This also secures the braid armour layer in position between the compensating cone assembly 16 and the clamping ring 18 and preventing the armour layer 10 from being pulled out of the cable gland 2. The armour layer 10 also remains in position over the outwardly flared ends 26 of the clamping portions 22 of the compensating cone assembly 16 when the clamping ring 18 is removed for visual inspection.

The third housing part 60 is then tightened onto the second housing part 36 to axially compress the seal 66 into engagement with the outer sheath 12 of the cable 4.

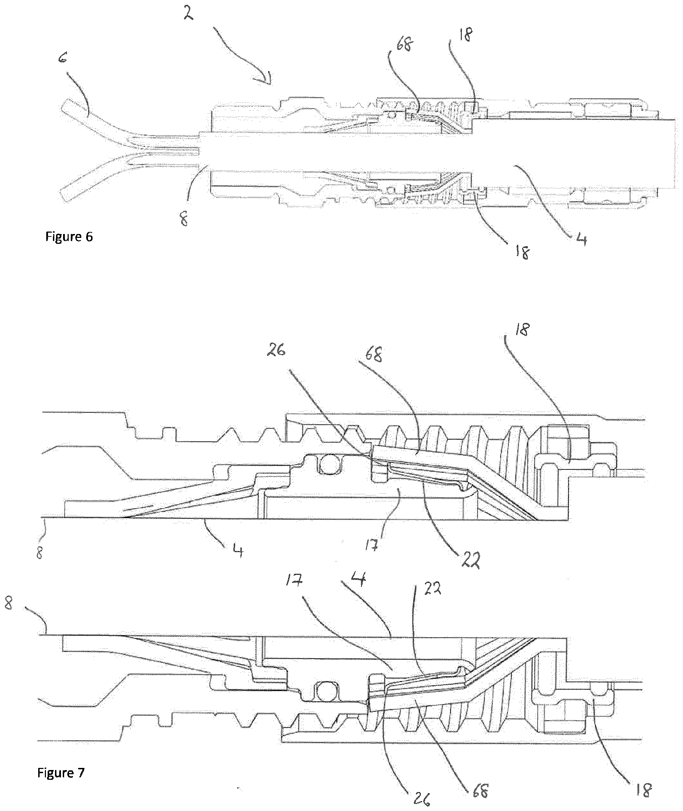

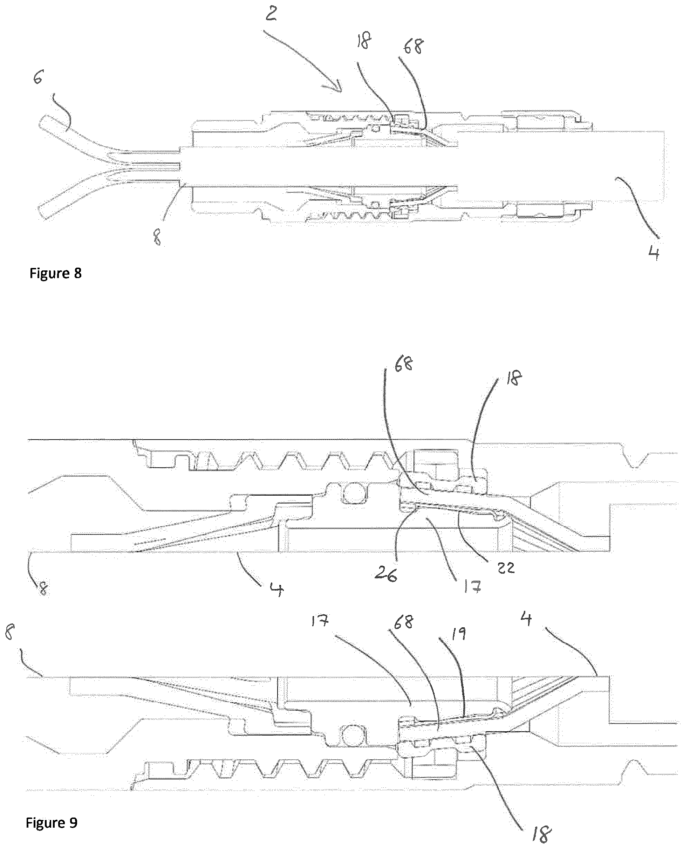

Figures 6 to 9 illustrate the operation of the cable gland 2 when clamping an armour layer of the cable 4 consisting of a single wire layer 68.

Referring to Figures 6 to 9, the cable gland 2 is mounted to the cable 4 in a manner identical to that described with reference to Figures 1 to 5. However, when the armour layer comprises a single wire layer 68, because the single wire layer 68 is thicker than the braid armour layer 10 and has greater rigidity than the clamping portions 22 of the compensating cone assembly 16, the thicker wire layer 68 causes the outwardly flared ends 26 of the clamping portions 22 of the compensating cone assembly 16 to become flattened between the insert body 17 and the single wire layer 68 so that the single wire layer 68 is clamped between the first clamping surfaces 24 of the clamping portions 22 and the clamping ring 18. At the same time, the clamping portions 22 are deflected radially inwards and the clamping ring 18 stretches slightly to accommodate the frusto-conical shape of the compensating cone assembly 16 and armour wire layer 68.

It will be appreciated by persons skilled in the art that the above embodiment has been described by way of example only and not in any limitative sense, and that various alternations and modifications are possible without departure from the scope of the disclosure as defined by the appended claims.

## Claims

1. An insert for a clamping device for clamping an armour layer of a cable in a cable connector, wherein the insert is adapted to be received in a cable connector and defines an aperture for receiving an inner part of a cable extending through the cable connector and defines at least one clamping portion for engaging an armour layer of the cable when part of the armour layer is clamped between the clamping portion and a clamping member, wherein at least one said clamping portion comprises a respective outwardly extending portion adapted to cause part of the armour layer to be deformed such that said part of said armour layer is clamped between said outwardly extending portion and a recess in the clamping member and/or adapted to be deformed as a result of clamping of part of said armour layer between the clamping portion and the clamping member.

2. An insert according to claim 1, wherein at least part of at least one said clamping portion is displaceable towards the inner part of the cable extending through said aperture as a result of clamping of the armour layer between the insert and the clamping member.

3. An insert according to claim 1 or 2, wherein at least one said outwardly extending portion is formed at an end portion of the corresponding said clamping portion.

4. An insert according to any one of the preceding claims, wherein at least part of at least one said clamping portion is displaceable towards the inner part of the cable extending through the aperture by means of deformation of said part of the clamping portion.

5. An insert according to any one of the preceding claims, wherein at least part of at least one said clamping portion is defined by a respective inwardly displaceable portion.

6. An insert according to claim 5, comprising a plurality of said inwardly displaceable portions separated by slots.

7. An insert according to claim 6, wherein the slots terminate at a location spaced from an axial end of the insert.

8. An insert according to any one of the preceding claims, wherein the insert comprises an insert body and a clamping part mounted to the insert body, and wherein the clamping part defines at least one said clamping portion and an end portion of the insert body is deformed radially outwards to prevent removal of the clamping part from the insert body.

9. A method of forming an insert according to claim 8, the method comprising mounting the clamping part to the insert body, and deforming an end portion of the insert body radially outwards to prevent removal of the clamping part from the insert body.

10. A clamping device for clamping an armour layer of a cable in a cable connector, the clamping device comprising:
an insert according to any one of claims 1 to 8; and
a clamping member adapted to be received in the cable connector and to co-operate with the insert to clamp the armour layer of the cable between the insert and the clamping member, the clamping member comprising at least one recess.

11. A device according to claim 10, including one or more of the following features:
(i) wherein the clamping member has an annular body adapted to surround the insert;
(ii) wherein the clamping member is adapted to stretch when an armour layer of the cable is clamped between the insert and the clamping member;
(iii) wherein a plurality of said recesses are arranged at substantially equal respective axial distances from each axial end of the clamping member; or
(iv) wherein the insert and the clamping member are adapted to abut each other in an axial direction of the cable when said armour layer is clamped between the insert and the clamping member when the insert and the clamping member are in a predetermined position relative to each other.

12. A cable connector comprising a clamping device according to claim 10 or 11, a first housing part adapted to receive said insert, and a second housing part adapted to engage said first housing part to maintain said insert and said clamping member in position relative to each other to clamp an armour layer of a cable between said at least one said clamping portion and said clamping member.

13. A cable connector according to claim 12, including one or more of the following features:
(i) wherein the first and second housing parts are co-operatively threaded such that engagement of the first housing part by the second housing part causes one housing part to abut the insert and the other housing part to abut the clamping member to move the clamping member to surround the insert and to thereby clamp the armour layer between the clamping member and at least one said clamping portion of the insert; or
(ii) wherein a position of the first housing part relative to the second housing part is defined by abutment with said insert and said clamping member in an axial direction of the cable when said armour layer is clamped between the insert and the clamping member when the insert and clamping member are in a predetermined position relative to each other.

14. A cable connector according to claim 12 or 13, wherein the position of the first housing part relative to the second housing part is defined by abutment of the first housing part with one of said insert and said clamping member, and abutment of the second housing part with the other of said insert and said clamping member.

15. A cable connector according to any one of claims 12 to 14, wherein the cable connector is a cable gland.
